# FASCICULE DE BREVET EUROPEEN

(11) **EP 4 116 499 B1**
(45) Date de publication et mention de la délivrance du brevet: **06.08.2025**
(21) Numéro de dépôt: 22181455.1
(22) Date de dépôt: 28.06.2022
(51) Int. Cl.: E02D 27/46, E02D 27/01, H02G 9/06

(54) **FONDATION MODULAIRE EN BÉTON**
MODULARES FUNDAMENT AUS BETON
MODULAR FOUNDATION MADE OF CONCRETE

(30) Priorité: 28.06.2021 FR 2106915
(43) Date de publication de la demande: 11.01.2023
(73) Titulaire: Stations-E, 91800 Boussy-Saint-Antoine (FR)
(72) Inventeur: ROLLAND, Alain, 91480 Quincy sous Sénart (FR)
(74) Mandataire: Ipsilon

(56) Documents cités:
- WO-A1-2016/011735
- IT-A1- PR 990 082
- KR-A- 20200 039 381
- US-A- 4 567 690

## Description

### Domaine technique

La présente invention concerne les systèmes de fondation modulaire, en particulier celles comportant des modules en béton.

### Technique antérieure

Les antennes des réseaux de télécommunications sont généralement portées par des mâts en liaison avec une fondation en béton qui peut, ou non, être enterrée.

Les dimensions et propriétés de la fondation sont contraintes par les caractéristiques du mât, son exposition aux conditions atmosphériques et les conditions nécessaires au bon fonctionnement des équipements installés sur le mât.

Par exemple, un mât accueillant des équipements de télécommunications de type antenne radio présente une limite relativement forte de dépointage maximum, de l'ordre de 1°, ce qui entraîne des contraintes à la fois sur le mât et sur la fondation sur laquelle les efforts sont ramenés, soit localement en pied de mât si celui-ci est directement fixé à la fondation, soit répartis sur la fondation si le mât est porté par une infrastructure fixée à la fondation.

Les fondations supportant des structures de type mât ou antenne comportent généralement un bloc monolithique en béton qui est coulé directement sur le site d'installation. Cette méthode nécessite le transport à la fois des matériaux de construction et du matériel de montage sur le site, et la main-d'œuvre nécessaire pour accomplir cette tâche, ce qui peut prendre du temps et s'avérer coûteux.

La demande WO2011034603 divulgue un système de fondation modulaire pour porter des antennes, des mâts ou des équipements techniques, la fondation comportant des blocs préfabriqués en béton assemblés entre eux grâce à des câbles de post-contrainte s'étendant dans des directions horizontales différentes.

La demande CN201920873904U divulgue un système de fondation modulaire pour un mât de télécommunications comportant des modules centraux en béton préfabriqué auxquels sont assemblés des modules adjacents servant de contre-poids.

KR20200039381 propose un ensemble de fondation pour la fixation d'un poteau, qui peut être installé rapidement et facilement.

US4567690 décrit un dispositif comprenant une enceinte avec une fondation modulaire comprenant plusieurs modules de croissance pour la culture de plantes et plusieurs modules de récolte pour la croissance et la récolte de vers de terre.

ITPR990082 présente une unité mobile préfabriquée comprenant une plate-forme de support qui ne nécessite pas d'excavations ou de travaux de fondation car elle est posée directement sur un terrain nivelé.

### Exposé de l'invention

Il existe un besoin pour perfectionner encore les fondations modulaires en béton afin de disposer d'un système facilement transportable, montable et/ou démontable sur site relativement rapidement, et pouvant supporter des infrastructures soumises à des efforts relativement importants, en particulier des infrastructures comportant un mât.

Il demeure également un intérêt pour une fondation modulaire facilitant l'arrivée de câbles, notamment électriques, dans la structure supportée.

### Résumé de l'invention

L'invention vise à répondre à cet objectif et a pour objet, selon l'un de ses aspects, une fondation modulaire comportant :
- Une pluralité de modules préfabriqués en béton définissant :
   - une couche supérieure de modules comportant au moins un passage interne débouchant sur au moins ses faces supérieure et inférieure,
   - au moins une couche inférieure de modules sur lequel repose au moins partiellement la couche supérieure, comportant au moins un passage interne débouchant sur au moins l'un de ses côtés et sur au moins sa face supérieure, ce passage interne communiquant au niveau de l'interface entre les couches supérieure et inférieure avec le passage interne de la couche supérieure, de manière à former au moins un passage interne global dans la fondation débouchant sur au moins un côté et sur au moins la face supérieure de la fondation.

Une telle fondation peut être installée facilement sur site et le ou les passages internes préexistants facilitent le raccordement à des câbles électriques et autres réseaux.

De préférence, le passage interne global débouche sur au moins deux côtés et sur au moins la face supérieure de la fondation, ou, mieux, sur tous les côtés et sur la face supérieure. Ainsi, le raccordement aux réseaux enterrés peut s'effectuer quelle que soit leur direction.

Le passage interne global peut présenter une section de diamètre au moins égal à 80 mm, ce qui permet d'y insérer des gaines de protection en vue d'y faire passer des câbles.

De préférence, le passage interne global comporte ainsi au moins un fourreau permettant le passage de câbles, notamment des câbles électriques ou des fibres optiques, vers l'infrastructure portée par la fondation.

Ces câbles sont par exemple raccordés à des équipements électriques accueillis au sein de cette infrastructure.

De préférence, la pluralité de modules forme un tout de forme générale sensiblement parallélépipédique, ayant par exemple une hauteur comprise entre 50 et 80 cm.

La fondation peut comporter une superposition d'au moins trois couches de modules, chaque couche comportant un passage interne communiquant avec le passage interne d'une couche qui lui est adjacente. Le nombre de couches peut être choisi en fonction de la masse recherchée pour la fondation.

### Agencement des modules au sein de la fondation

De préférence, les modules d'une même couche sont assemblés latéralement entre eux. Les modules peuvent être disposés avec un décalage d'une couche à la suivante, notamment en quinconce d'une couche à la suivante.

Les modules au sein d'une couche peuvent être tous identiques, ou identiques au moins par moitié.

De préférence, au moins une couche de modules de la fondation comporte au moins deux modules de longueurs différentes, de préférence au moins deux modules dont l'un présente une longueur sensiblement double de celle de l'autre. Cela permet, lorsque les modules sont disposés en quinconce, de former des couches présentant toutes la même longueur et donc se superposant exactement.

Outre le passage interne global, la fondation peut comporter des réservations verticales sur au moins deux modules au moins partiellement superposés, les réservations verticales communiquant au niveau de l'interface entre les deux modules.

Ces réservations verticales sont de préférence agencées pour accueillir des tirants d'assemblage des modules entre eux et/ou des vis s'engageant dans des inserts filetés.

Ces réservations peuvent permettre de fixer les modules et/ou les couches de la fondation en eux, notamment grâce à des douilles d'ancrage placées dans la couche du dessous et dans lesquelles les vis et/ou les tirants viennent s'insérer.

### Modules

De préférence, les modules sont de forme générale parallélépipédique. Ils ont par exemple une masse comprise entre 400 et 900 kg, et une épaisseur comprise entre 200 et 300 mm.

Les modules de l'ensemble de la fondation sont de préférence de même largeur, par exemple comprise entre 90 et 110 cm.

Les modules peuvent présenter des premiers reliefs sur leur face inférieure, les modules de la ou des couches inférieures présentant des deuxièmes reliefs sur leur face supérieure, les deuxièmes reliefs étant agencés pour s'emboîter au moins partiellement dans les premiers reliefs.

De préférence, au moins une partie des modules présente une cavité verticale sur au moins deux côtés opposés, notamment une cavité de forme demi-cylindrique, agencée pour former avec une cavité verticale opposée d'un module adjacent un passage interne vertical de plus grande section, notamment de section circulaire. Cette cavité verticale communique de préférence avec le passage interne global de la fondation lorsque les modules sont assemblés.

### Modules de la couche supérieure

Les modules de la couche supérieure comportent de préférence au moins un passage interne débouchant sur au moins leurs faces supérieure et inférieure, notamment un passage interne formé par la réunion d'une réservation horizontale et d'au moins une réservation verticale, de préférence une réservation verticale placée au centre du module, de préférence au moins trois réservations verticales dont une placée au centre du module.

### Modules des couches inférieures

De même, les modules de la ou des couche(s) inférieure(s) comportent au moins un passage interne débouchant sur au moins l'un de leurs côtés et sur au moins leur face supérieure, de préférence sur au moins deux côtés opposés et sur les faces supérieure et inférieure du module, notamment un passage interne formé par la réunion d'une réservation horizontale et d'au moins une réservation verticale.

Le passage interne des modules des couches supérieure et inférieure(s) forme de préférence une partie du passage interne global de la fondation.

Les modules de la ou des couche(s) inférieure(s) peuvent également présenter au moins une cavité horizontale sur au moins deux côtés opposés, notamment une cavité de forme demi-cylindrique, agencée pour former avec une cavité horizontale opposée d'un module adjacent un passage interne horizontal de plus grande section, notamment de section circulaire.

### Couche et dalles de support

La fondation modulaire selon l'invention peut comporter une couche de support comportant des dalles en béton sur lesquelles repose l'ensemble des modules.

Dans certains modes de réalisation, au moins l'une desdites dalles est plus large que le reste des modules, ce qui permet d'accroître l'assise de la fondation. Dans d'autres modes de réalisation, les dalles sont de même largeur que le reste des modules.

La couche de support a par exemple une épaisseur comprise entre 200 et 300 mm.

Les dalles en béton présentent de préférence des logements sur leur face supérieure, dans lesquels les modules de la couche reposant sur la couche de support peuvent venir s'emboiter, notamment via les reliefs précités.

Les dalles en béton peuvent présenter des réservations verticales débouchant sur leur face supérieure.

Celles-ci peuvent servir pour fixer les modules de la couche reposant sur la couche de support, par exemple grâce à des douilles d'ancrage comme décrit plus haut.

La fondation peut comporter des réservations traversant verticalement la couche supérieure et au moins partiellement la ou les couches inférieures, de préférence au moins quatre réservations.

Lorsque la fondation ne comporte pas de couche de support, ces réservations verticales aboutissent par exemple à une douille plateau placée au sein de la couche inférieure qui est au contact du sol, ce qui permet de fixer l'infrastructure portée par la fondation, notamment grâce à des tirants d'assemblage venant se fixer dans les douilles plateau.

En variante, ces réservations peuvent communiquer avec des réservations verticales des dalles en béton au niveau de l'interface entre la couche de support et la couche reposant sur la couche de support, une douille plateau pouvant alors être placée au sein des dalles de béton.

### Procédé d'installation

L'invention a encore pour objet un procédé d'installation d'une fondation modulaire en béton telle que définie plus haut, le procédé comportant les étapes consistant à :
- réaliser une excavation,
- réaliser la fondation en rapportant les modules préfabriqués en béton dans l'excavation.

Le procédé peut comporter l'insertion de fourreaux de passage de câble dans les passages internes de la fondation ainsi constituée.

Le procédé peut également comporter la fixation des modules entre eux à l'aide de tirants traversants les modules.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] représente de manière schématique un exemple de fondation selon l'invention,
[Fig 2a], [Fig 2b], [Fig 2c] et [Fig 2d] illustrent de manière schématique d'autres exemples de fondations selon l'invention,
[Fig 3] est une vue en perspective partielle et schématique d'un exemple de module supérieur,
[Fig 4a] et [Fig 4b] représentent les faces supérieure et inférieure du module supérieur de la figure 3, respectivement,
[Fig 5a], [Fig 5b], [Fig 5c] et [Fig 5d] illustrent en coupe longitudinale schématique et partielle selon W, X, Y et Z de la figure 4a, respectivement, certains éléments structurels du module de la figure 3,
[Fig 6a] et [Fig 6b] représentent en vue en perspective partielle et schématique des exemples de module inférieur,
[Fig 7a] et [Fig 7b] représentent les faces supérieure et inférieure du module supérieur de la figure 6a, respectivement,
[Fig 8a], [Fig 8b], [Fig 8c] et [Fig 8d] illustrent en coupe longitudinale schématique et partielle selon AF, AG, AK et AH de la figure 7a, respectivement, certains éléments structurels du module de la figure 6a,
[Fig 9] est une vue en perspective, partielle et schématique, d'un exemple de dalle d'une couche de support,
[Fig 10a], [Fig 10b], [Fig 10c] et [Fig 10d] illustrent en coupe longitudinale schématique et partielle selon AL, AM, AN et AQ de la figure 9, respectivement, certains éléments structurels de la dalle de la figure 9,
[Fig 11] représente de manière schématique et partielle la face supérieure d'une fondation selon l'invention, et,
[Fig 12a], [Fig 12b], et [Fig 12c] illustrent en coupe longitudinale schématique et partielle selon P, Q et R de la figure 11 la fondation de la figure 1, respectivement,
[Fig 13a], [Fig 13b], et [Fig 13c] illustrent, en coupe latérale schématique et partielle selon S, T et U de la figure 11, respectivement, certains détails sur la manière dont les modules de la fondation de la figure 1 sont agencés et fixés entre eux, et
[Fig 14] illustre en coupe longitudinale schématique et partielle selon P de la figure 11, une fondation comportant deux couches.

### Description détaillée

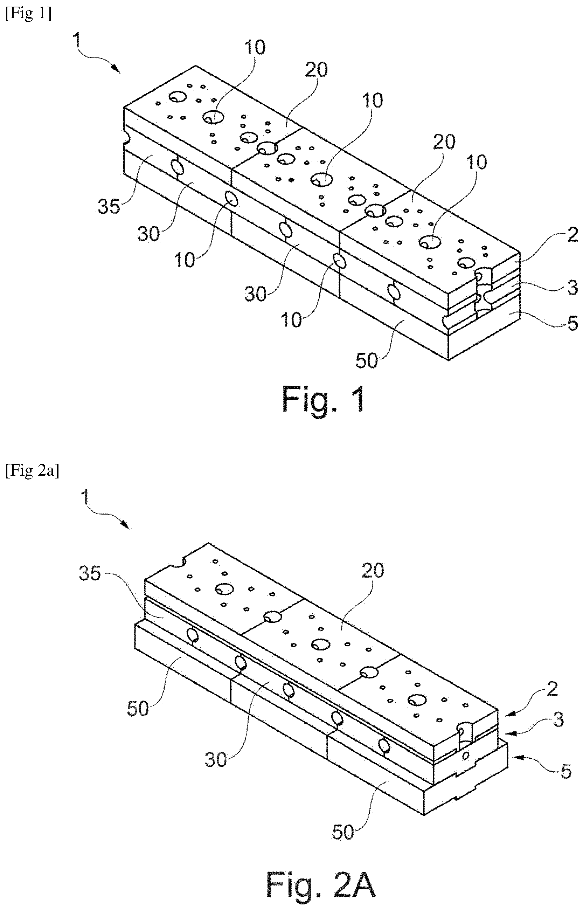

On a représenté à la figure 1 un exemple de fondation modulaire 1 selon l'invention. La fondation modulaire 1 a une forme de pavé et comporte une couche supérieure 2 reposant sur une couche inférieure 3, et une couche de support 5 sous-jacente.

Un passage interne 10 continu s'étend horizontalement et verticalement dans les couches supérieure 2 et inférieure 3 et débouche sur la face 1a supérieure de la fondation 1, et sur l'ensemble de ses cotés.

Ce passage interne permet par exemple le passage de câbles vers l'intérieur de la structure portée par la fondation 1, notamment lorsque celle-ci accueille des équipements électriques.

La couche supérieure 2 comporte trois modules 20 identiques de forme parallélépipédique, chacun étant encore désigné dans la suite par « module supérieur ».

La couche inférieure 3 comporte quatre modules parallélépipédiques assemblés latéralement entre eux, chacun étant encore désigné dans la suite par « module inférieur » ; la couche 3 comporte ainsi deux premiers modules 30 sur lesquels sont assemblés, de part et d'autre, deux modules 35 identiques par moitié aux premiers modules 30.

Tous les modules présentent la même largeur 1, par exemple d'environ 100 cm.

Les modules supérieurs 20 et les modules inférieurs 30 présentent la même longueur L, par exemple d'environ 150 cm, et sont disposés en quinconce d'une couche à l'autre. Les deux modules 35 assemblés aux extrémités de la couche inférieure 3 présentent une longueur sensiblement égale à la moitié de la longueur des autres modules, soit L/2, de façon à ce que les couches 2 et 3 se superposent exactement.

La couche supérieure 2 présente par exemple une épaisseur d'environ 200mm.

La couche inférieur 3 présente par exemple une épaisseur d'environ 300mm.

La couche de support 5 comporte, dans l'exemple considéré, trois dalles en béton 50, encore désignées dans la suite par «dalles de support »

Les dalles 50 sont parallélépipédiques, de longueur et largeur égales à celles des modules supérieurs 20, et d'épaisseur par exemple d'environ 300mm.

Dans l'exemple illustré à la figure 2a, les dalles de support 50 sont plus larges que le reste des modules, ce qui permet à la fondation de supporter des contraintes plus importantes.

La taille de la fondation 1 et le nombre de couches inférieures 3 est variable et peut être choisie selon les besoins. La fondation peut comporter la couche de support 5, ou non, ce choix dépendant notamment des conditions climatiques et de la nature du sol du site sur lequel la fondation est installée.

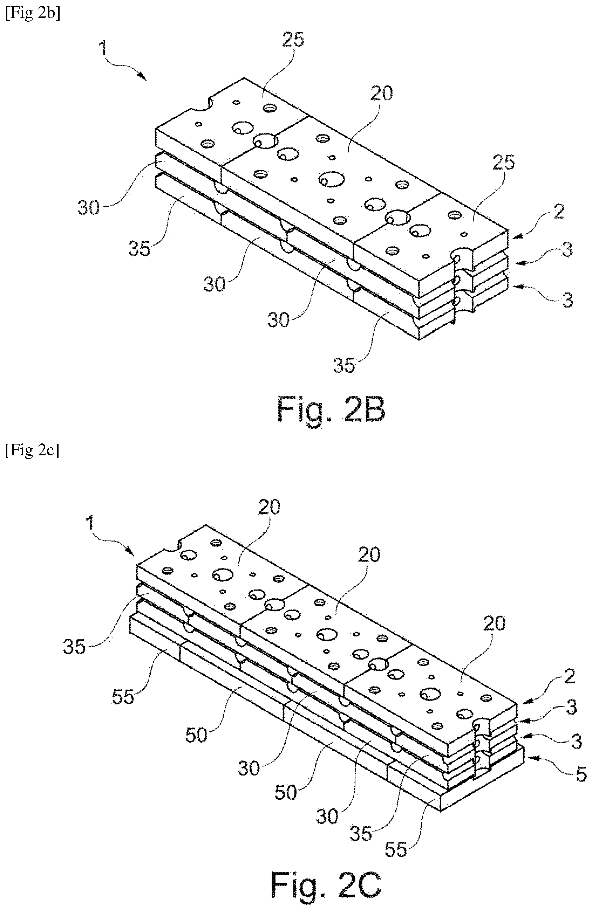

Dans l'exemple illustré à la figure 2b, la fondation 1 comporte deux couches inférieures 3 sur lesquelles repose une couche supérieure 2 comportant un module supérieur 20 et deux demi-modules supérieurs 25 assemblés de part et d'autre du module 20.

Le passage interne global 10 est formé d'un passage interne 12 de la couche supérieure et de passages internes 13 des couches inférieures qui communiquent à l'interface entre deux couches adjacentes.

Le passage interne global 10 débouche sur chacune des faces latérales des couches 2 et 3, c'est-à-dire sur trois niveaux la fondation 1, et sur chacune des faces avant et arrière (non visible sur la figure 2b) des couches inférieures 3 en plusieurs endroits espacés régulièrement sur la longueur.

Le passage interne 10 débouche également à plusieurs endroits sur la face supérieure de la couche supérieure.

Dans l'exemple illustré à la figure 2c, la fondation comporte 4 couches au total : une couche supérieure 2, deux couches inférieures 3 et une couche de support 5.

Les couches supérieure 2 et inférieures 3 présentent la même épaisseur, par exemple égale à 200mm environ.

Dans cet exemple, les dalles 50 de la couche de support 5 présentent deux longueurs différentes, l'une étant le double de l'autre, afin que la longueur totale de la couche de support 5 soit la même que celle des autres couches 2 et 3.

La couche de support 5 est par exemple plus épaisse que les autres couches, et elle est par exemple d'épaisseur 300 mm environ.

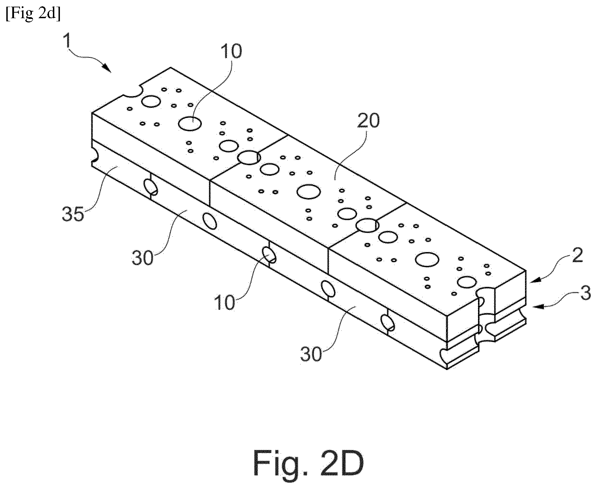

Lorsque les conditions de sol du site d'installation le permettent, la fondation peut ne pas comporter de couche de support 5, notamment comporter une couche supérieure 2 et une seule couche inférieure 3, comme illustré à la figure 2d.

Dans ce cas, la couche inférieure 3 comporte de préférence des moyens de fixation de l'infrastructure portée, comme ce sera décrit plus bas.

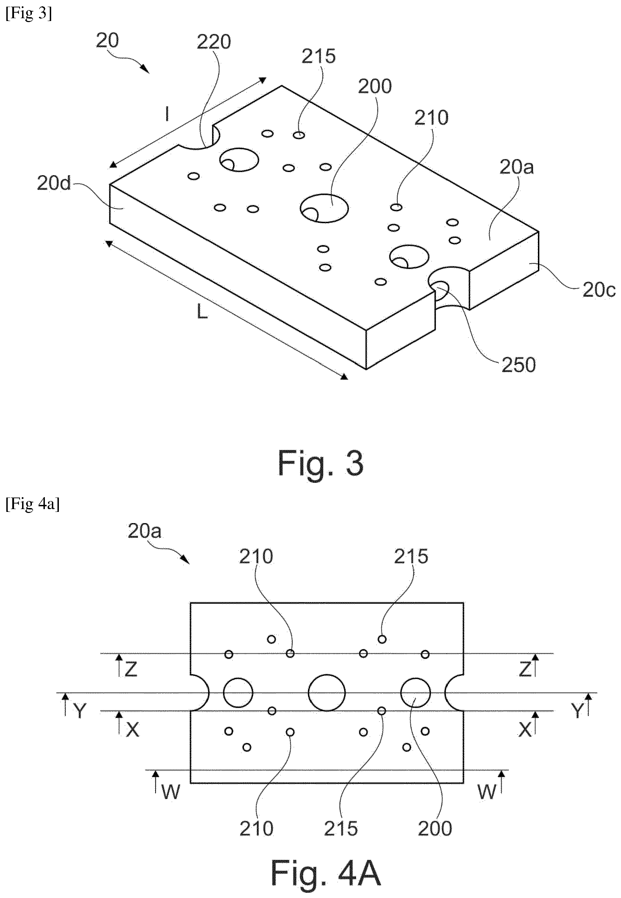

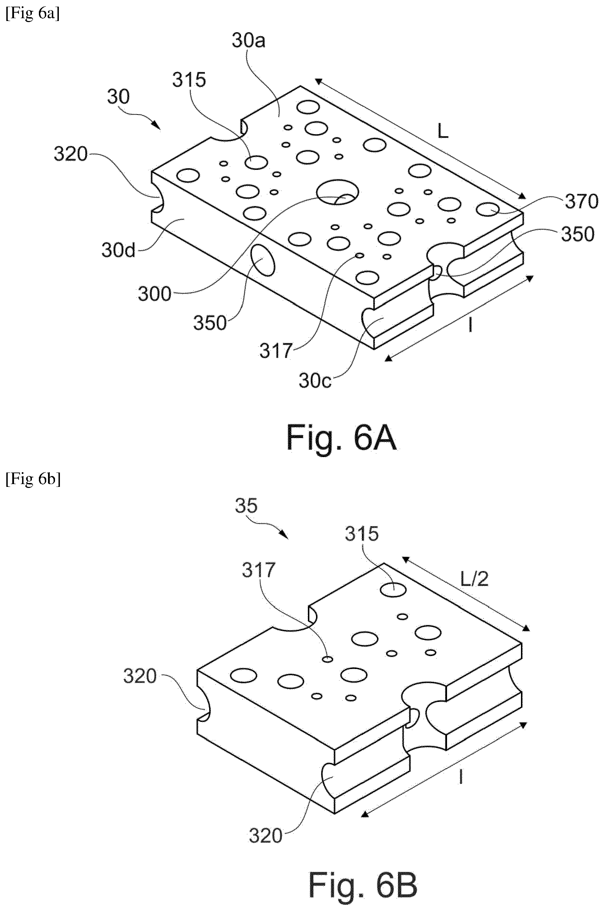

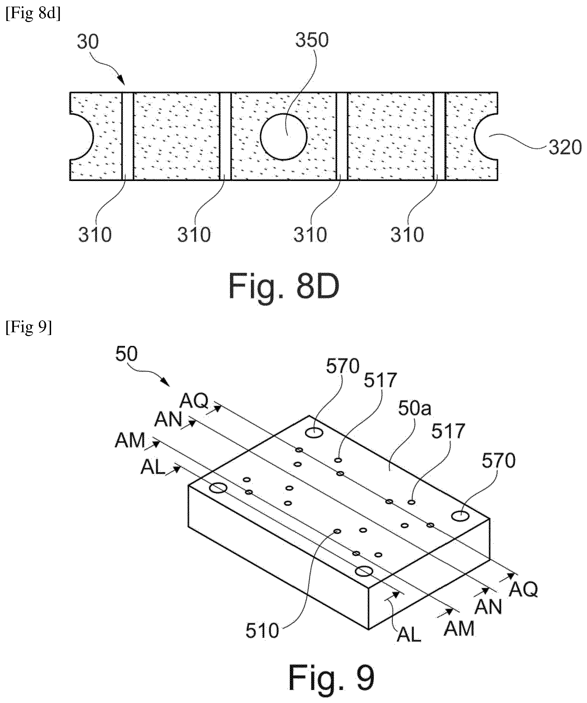

On va maintenant décrire des exemples de modules en référence à la figure 3 (module supérieur 20), la figure 6a (module inférieur 30) et la figure 9 (dalle de support).

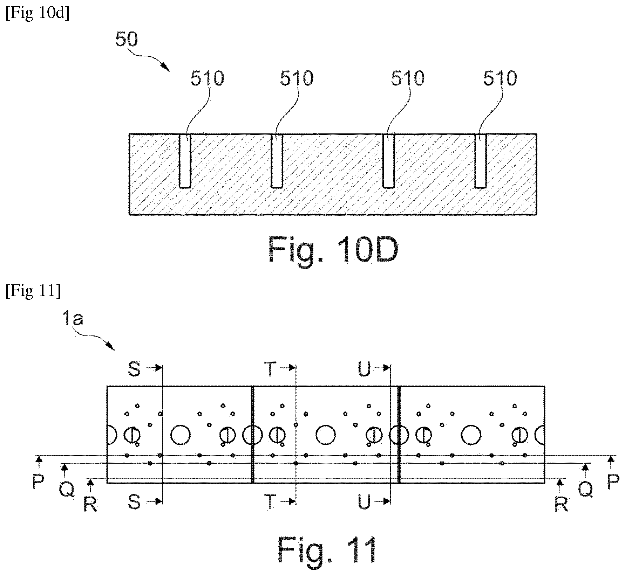

L'assemblage et la fixation des différents éléments de la fondation entre eux, et la fixation de la structure portée par la fondation, sera décrit par la suite en référence aux figures 11 à 13.

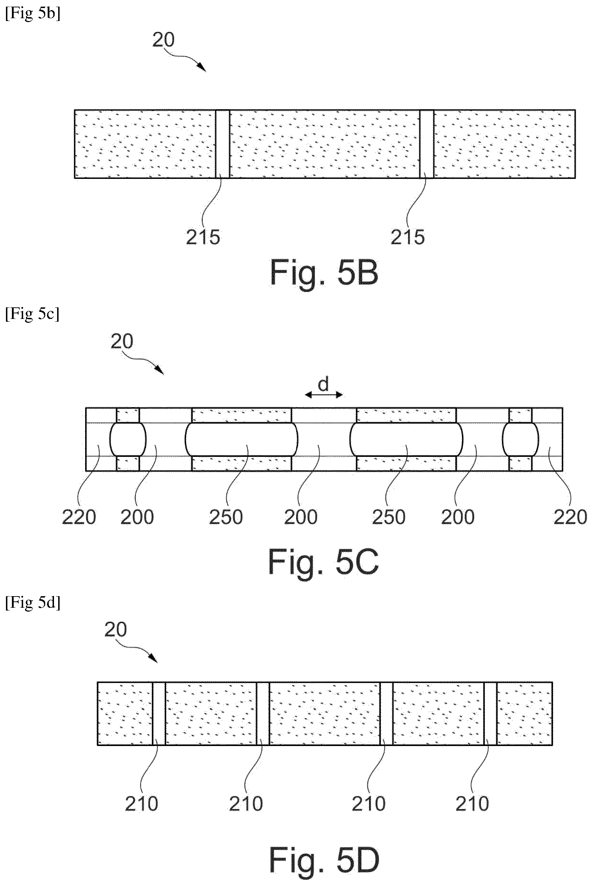

Le module supérieur 20 comporte par exemple trois réservations verticales traversantes 200 dont les axes sont disposés dans le plan médian longitudinal du module, comme illustré à la figure 4a, et une réservation horizontale traversante 250 qui communique avec les réservations verticales 200, comme illustré à la figure 5c.

Les réservations 200 ont par exemple un diamètre d compris entre 80 et 220 mm. Elles peuvent accueillir des gaines de protection servant par exemple au passage de câbles électriques ou de fibres optiques vers l'intérieur de la structure supportée par la fondation, où ils peuvent être raccordés aux équipements électriques de la structure.

Le module 20 peut également présenter une cavité verticale 220 de forme demi-cylindrique sur ses deux faces latérales 20c, qui communique avec la réservation horizontale 250.

Ainsi, lorsqu'on assemble les modules 20 entre eux pour former la couche supérieure 2, la cavité verticale 220 forme avec la cavité 220 opposée d'un module 20 adjacent une réservation verticale de section circulaire similaire aux réservations 200.

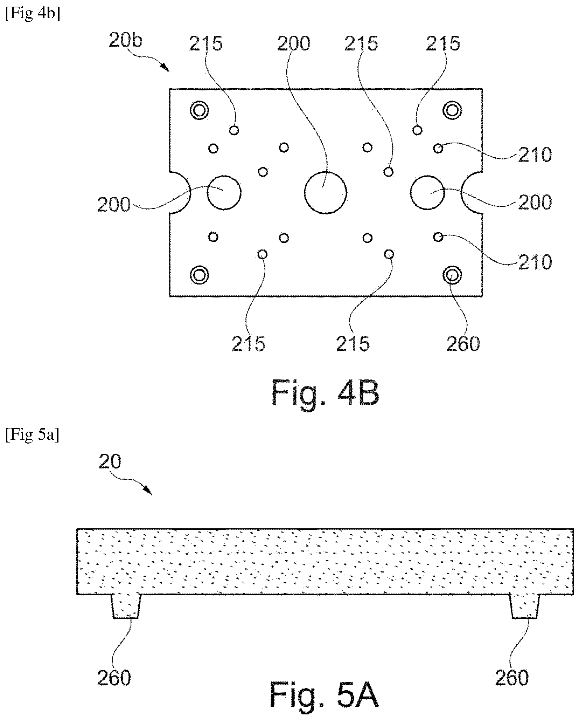

Le module supérieur 20 comporte de préférence des bossages 260 sur sa face inférieure permettant l'emboîtement de la couche supérieure 2 dans la couche inférieure 3. Ces reliefs 260 ont par exemple la forme d'un tronc de cône, comme illustré à la figure 5a, de diamètre de l'ordre de 100 mm et de hauteur d'environ 80mm .

Les reliefs 260 sont par exemple disposés aux quatre coins du module, comme illustré à la figure 4b.

Le module supérieur 20 comporte d'autres réservations verticales 210 et 215. Ces réservations sont traversantes et débouchent sur ses faces inférieure et supérieure, comme illustré aux figures 5b et 5d. Elles ont un diamètre moindre par rapport aux réservations 200, par exemple entre 35 et 40 mm

Les réservations 210, par exemple au nombre de huit comme dans l'exemple considéré, peuvent accueillir des moyens de fixation de la structure portée par la fondation, notamment lorsque la structure comporte un mât.

Les réservations 215, par exemple au nombre de six comme dans l'exemple considéré, peuvent accueillir des moyens de fixation entre le module supérieur 2 et la couche inférieure 3 sur laquelle il repose, comme cela est décrit plus bas.

Le module inférieur 30 comporte par exemple une réservation verticale traversante 300 et deux réservations horizontales traversantes 350, disposées par exemple perpendiculairement de façon à déboucher sur l'ensemble des côtés 30c et 30d du module 30, comme représenté à la figure 6a.

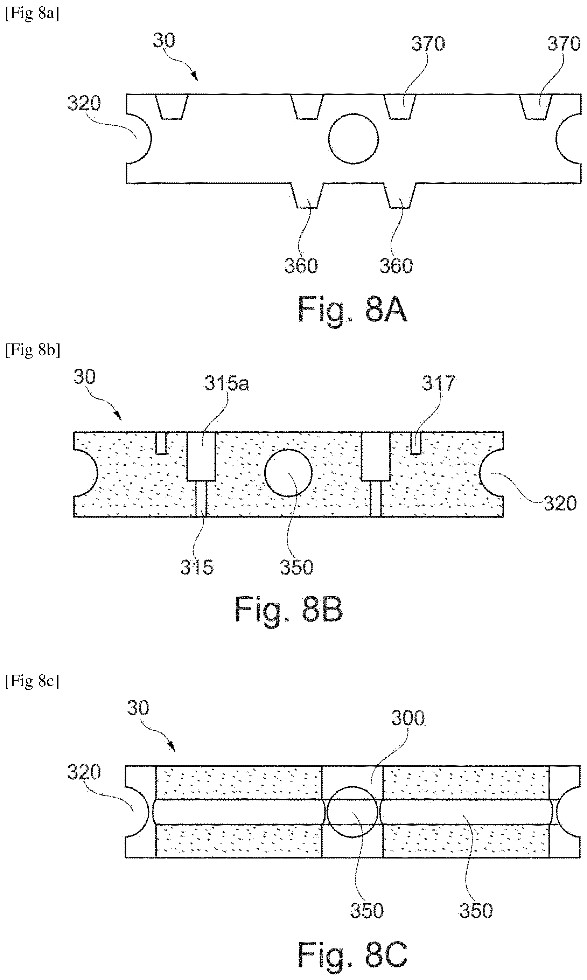

Comme illustré à la figure 8c, les réservations 300 et 350 communiquent entre elles, par exemple au centre du module.

Les réservations verticales 300 communiquent au niveau de la face supérieure 30a du module 30 avec celles de la couche supérieure 2 de façon à former le passage interne 10 mentionné plus haut.

Le module 30 peut également présenter une cavité horizontale 320 de forme demi-cylindrique sur ses deux faces latérales 30c, communiquant avec la réservation horizontale 350 qui s'étend longitudinalement.

La cavité 320 forme avec celle d'un module inférieur 30 ou 35 assemblé latéralement une réservation cylindrique horizontale.

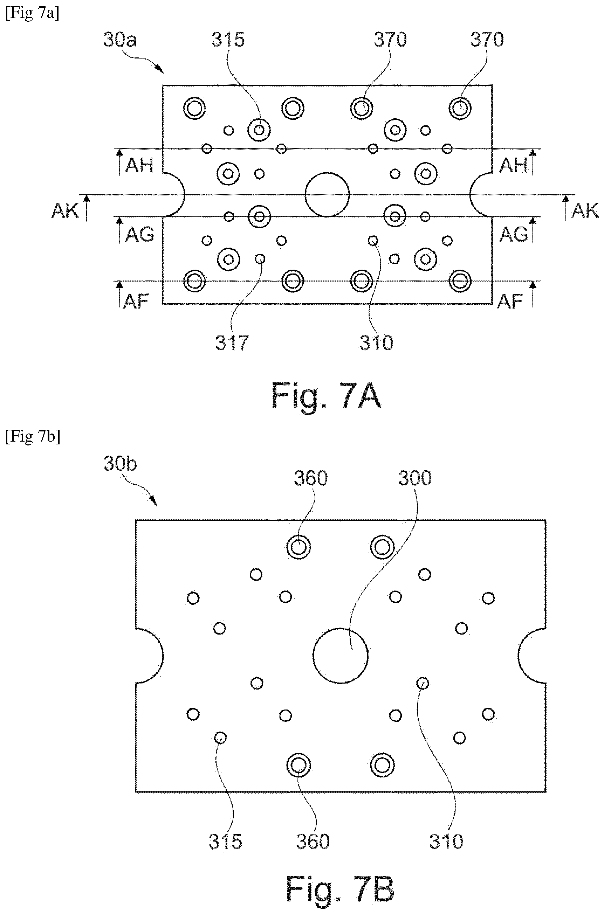

Dans l'exemple considéré et comme représenté à la figure 7b, le module inférieur 30 comporte sur sa face inférieure 30b des bossages 360 destinés à s'emboîter dans des logements correspondants disposés sur la face supérieure des modules sur lesquels le module inférieur 30 peut reposer.

Il s'agit par exemple d'autres modules inférieurs 30, si la fondation comporte plusieurs couches inférieures 30, qui comportent par exemple huit logements 370 comme illustré à la figure 7a.

Les logements 370 sont par exemple disposés selon des rangées de quatre le long des bords longitudinaux de la face supérieure 30a du module 30, les logements d'une rangée étant apparents à la figure 8a, de manière à pouvoir accueillir les bossages 260 des modules supérieurs 20 et/ou les bossages 360 des modules supérieurs 30.

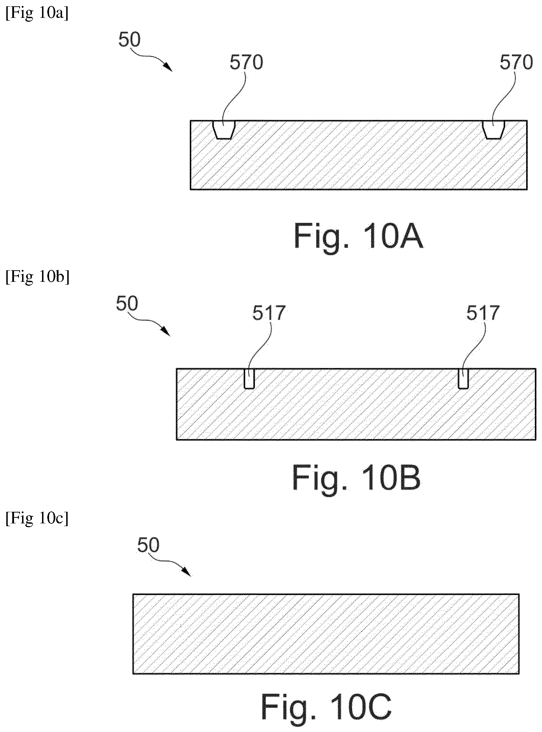

Les dalles de support 50 peuvent également comporter des rangées de logements 570, comme illustré à la figure 10a.

Le module inférieur 30 comporte d'autres réservations verticales 310 de petit diamètre, par exemple de l'ordre de 40 mm. Ces réservations 310 sont agencées pour communiquer avec les réservations 210 des modules supérieurs 20 afin de fixer la structure portée par la fondation.

Les réservations 310 peuvent être traversantes, tel qu'illustré à la figure 8d, notamment afin de communiquer avec certaines réservations des dalles de support lorsque la fondation comporte une couche de support 5.

Les réservations 310 peuvent encore ne pas être traversantes, notamment lorsque la fondation comporte uniquement deux couches, à savoir une couche supérieure 2 et une couche inférieure 3.

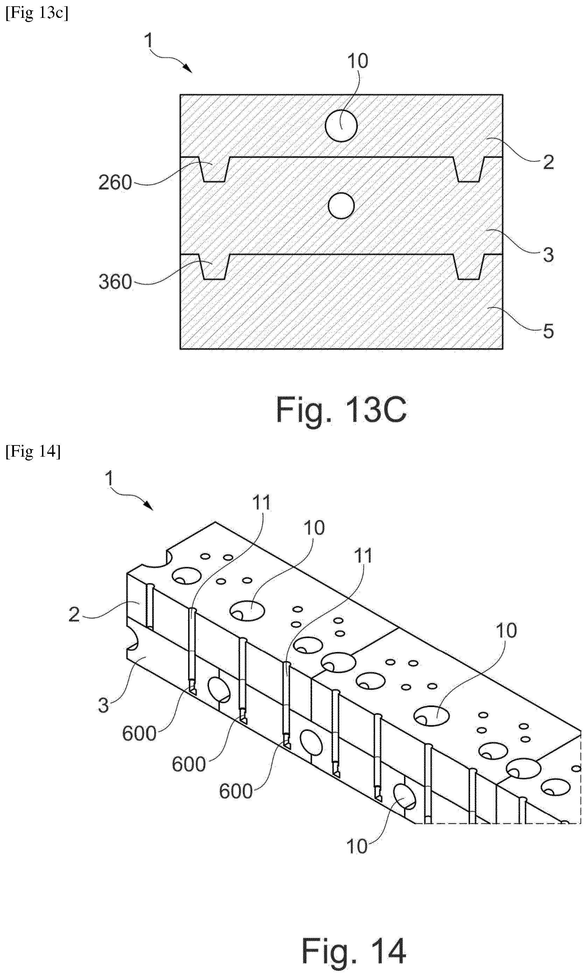

Dans ce cas, les réservations peuvent se présenter sous forme de logement au fond lesquels sont par exemple placées des douilles plateau 600 lors du coulage des modules 30, comme illustré à la figure 14. Dans l'exemple considéré, le module inférieur 30 comporte de plus des réservations verticales 315 servant à la fixation du module avec la couche sur laquelle il repose, par exemple une autre couche inférieure ou la couche de support.

Comme illustré à la figure 8b, les réservations 315 verticales sont traversantes et présentent un élargissement 315a dans leur partie supérieure, ce qui permet de recevoir la tête d'une vis de fixation lors de la mise en place et fixation du module sur la couche sous-jacente.

Le module inférieur 30 peut comporter, dans le même plan que les réservations 315, des logements 317 agencés pour s'aligner avec les réservations 215 (respectivement 315) du module supérieur 20 (respectivement inférieur 30) reposant sur ce module 30 dans la fondation 1.

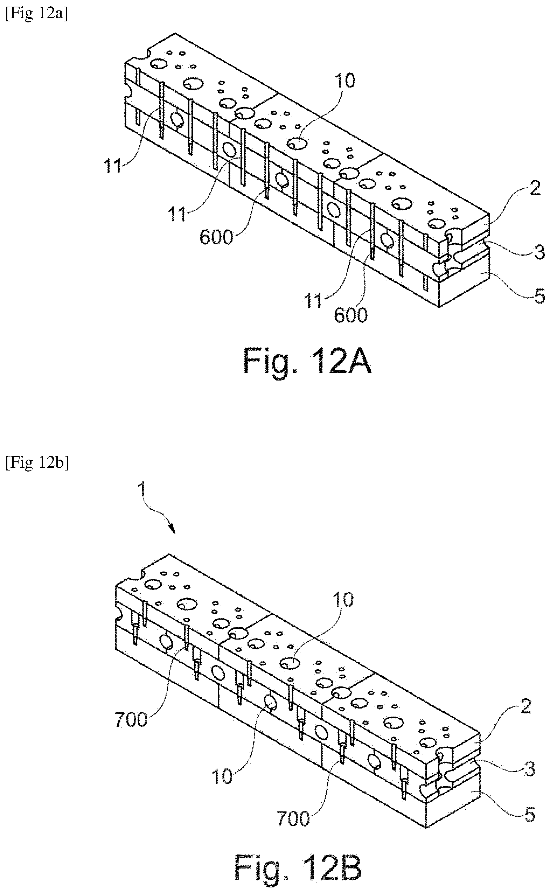

On place par exemple des douilles d'ancrage 700 dans les logements 317 au moment du coulage du béton, ce qui permet ensuite la fixation des modules entre eux, comme illustré à la figure 12b.

Le « demi -module » inférieur 35, illustré à la figure 6b, est par exemple identique par moitié au module 30 et comporte donc les mêmes caractéristiques que celles qui viennent d'être décrites.

La dalle de support 50 représentée à la figure 9 peut comporter différents types de logements sur sa face supérieure 50a, permettant la fixation et l'emboitement des modules de la fondation.

Dans l'exemple considéré et comme illustré la figure 10c, la dalle de support 50 est dépourvue de réservations communiquant avec le passage interne 10.

Comme décrit précédemment, les logements 570 disposés aux quatre coins de la face supérieure 50a du module permettent d'accueillir les bossages 360 des modules inférieurs 30 reposant sur la couche de support 5.

Comme illustré à la figure 10b, la dalle de support 50 peut encore comporter des logements 517 de faible profondeur, par exemple de l'ordre de 80 mm, agencés pour s'aligner avec les réservations 315 d'un module supérieur 30 sus-jacent, et dans lesquels on place par exemple des douilles d'ancrage 700 lors du coulage de la dalle.

La dalle de support 50 peut encore comporter, tel qu'illustré à la figure 10d, des logements 510, par exemple de profondeur 200 mm pour une dalle d'épaisseur 300mm, agencés pour s'aligner avec les réservations 310 des modules inférieurs sus-jacents.

Lors de l'assemblage des modules, on forme ainsi à partir des réservations 210, 310 et des logements 510, des réservations verticales 11 traversant l'ensemble des couches 2, 3 et 5 de la fondation 1, tel qu'illustré à la figure 12a.

Lorsque la fondation ne comporte que deux couches, les réservations verticales 11 sont formées des réservations 210 et 310, les réservations 310 se présentant alors sous forme de logement, comme illustré à la figure 14.

On peut placer une douille plateau 600 au fond de certains logements 310 ou 510 lors du coulage des dalles, ce qui permet, une fois les modules assemblés, de venir fixer une structure sur la fondation en insérant par exemple des tirants d'assemblage (non représentés) dans les réservations 11.Lorsqu'on visse ces tirants dans les douilles plateau 600, l'ensemble des modules est consolidé par effet de compression des modules entre eux.

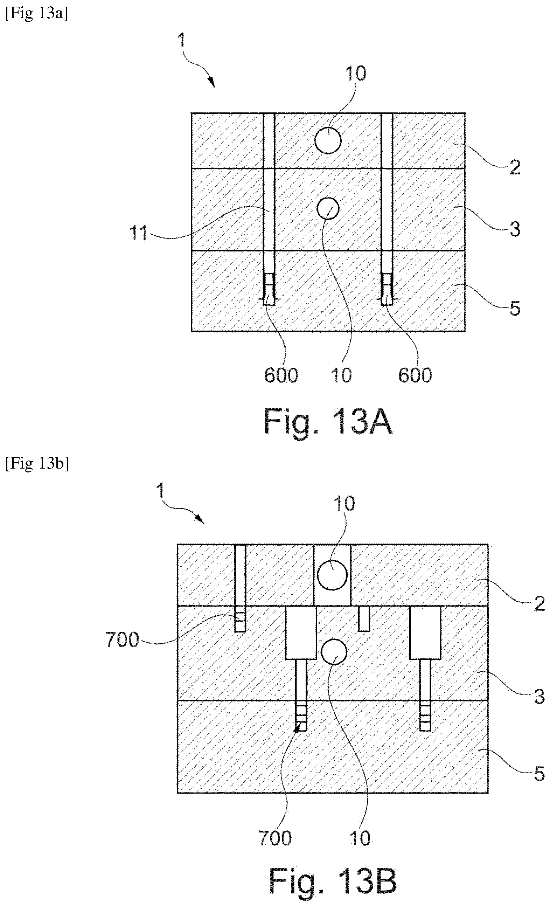

L'assemblage de deux couches adjacentes grâce aux douilles d'ancrage 700 décrites précédemment s'effectue directement lors de la mise en place des modules. Ces fixations sont de préférence disposées dans la fondation en décalé, comme illustré à la figure 12b et à la figure 13b, ce qui permet d'accroître la solidarité de l'ensemble.

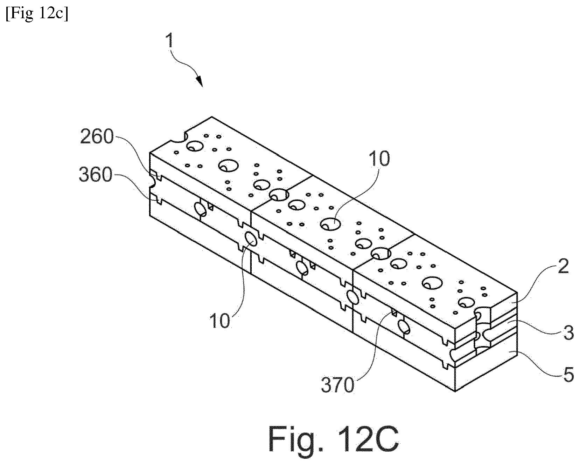

L'emboitement des bossages 260 et 360 avec les logements 370 et 570 des différentes couches de la fondation est illustré à la figure 12c et à la figure 13c pour une fondation comportant une couche supérieure 2, une couche inférieure 3 et une couche de support 5.

Les logements 370b non occupés permettent l'emboitement de deux couches inférieures 3, si l'on souhaite par exemple une fondation à 4 couches.

Pour réaliser une fondation modulaire 1 selon l'invention, on commence par exemple par creuser un trou de la profondeur souhaitée, par exemple entre 50 et 80 cm, et on en aplanit le fond.

On peut disposer une couche de sable sur le fond ainsi aplani. On dépose ensuite les dalles de support 50 pour former la couche de support 5, si celle-ci est nécessaire suivant la structure à supporter.

On rapporte ensuite les modules 20 et 30 préfabriqués dans l'excavation, en fixant les modules les uns aux autres grâce aux douilles d'ancrage 700 au fur et à mesure de la mise en place.

Une fois la fondation assemblée, on vient par exemple visser la structure supportée sur la fondation grâce aux douilles plateau présentes dans la couche de support 5.

On peut mettre en place les fourreaux dans les passages internes formés au sein des modules assemblés.

On peut notamment avoir des modules inférieurs 30 comportant des cavités demi-cylindriques sur leur face supérieure 30a à la place de certaines réservations horizontales, comme illustré dans l'assemblage des figures 2b et 2c.

L'emboitement des couches les unes par rapports aux autres peut se faire grâce à des reliefs différents des bossages 260 ou 360 décrits ci-dessus.

## Revendications

1. Fondation modulaire (1) comportant :
• Une pluralité de modules préfabriqués en béton, formant de préférence un tout de forme générale sensiblement parallélépipédique, les modules ayant de préférence une épaisseur comprise entre 200 et 300 mm, cette pluralité de modules définissant :
- une couche supérieure (2) de modules (20 ; 25) comportant au moins un passage interne débouchant sur au moins ses faces supérieure et inférieure,
- au moins une couche inférieure (3) de modules (30 ; 35) sur laquelle repose au moins partiellement la couche supérieure (2), comportant au moins un passage interne débouchant sur au moins l'un de ses côtés et sur au moins sa face supérieure,
le passage interne de ladite couche (3) communiquant au niveau de l'interface entre les couches supérieure (2) et inférieure (3) avec le passage interne de la couche supérieure (2) de manière à former au moins un passage interne global (10) dans la fondation débouchant sur au moins un côté et sur au moins la face supérieure (1a) de la fondation,
les modules d'une même couche étant de préférence assemblés latéralement entre eux,
**caractérisé en ce que**
au moins une partie des modules présente une cavité verticale (220) sur au moins deux côtés opposés agencée pour former avec une cavité verticale opposée d'un module adjacent un passage interne vertical de plus grande section, et/ou les modules (30) de la ou des couche(s) inférieure(s) (3) présente au moins une cavité horizontale (320) sur au moins deux côtés opposés (30c) agencée pour former avec une cavité horizontale opposée d'un module adjacent un passage interne horizontal de plus grande section.

2. Fondation modulaire selon la revendication 1, comportant une superposition d'au moins trois couches (2 ; 3) de modules.

3. Fondation modulaire selon l'une des revendications précédentes, les modules au sein d'une couche étant identiques au moins par moitié.

4. Fondation modulaire selon l'une quelconque des revendications précédentes, les modules étant disposés avec un décalage d'une couche à la suivante, notamment étant disposés en quinconce d'une couche à la suivante.

5. Fondation modulaire selon l'une quelconque des revendications précédentes, au moins une couche de modules de la fondation comportant au moins deux modules de longueurs différentes (30, 35), de préférence au moins deux modules dont l'un (30) présente une longueur sensiblement double de celle de l'autre (35).

6. Fondation modulaire selon l'une quelconque des revendications précédentes, le passage interne global (10) dans la fondation débouchant sur au moins deux côtés et sur au moins la face supérieure (1a) de la fondation, mieux, sur tous les côtés et sur la face supérieure, le passage interne global (10) présentant de préférence une section de diamètre (d) au moins égal à 80 mm, le passage interne global (10) comportant de préférence au moins un fourreau permettant le passage de câbles, notamment des câbles électriques ou des fibres optiques.

7. Fondation modulaire selon l'une quelconque des revendications précédentes, comportant des réservations verticales (210 ; 310 ; 215 ; 315) sur au moins deux modules au moins partiellement superposés, les réservations verticales communiquant au niveau de l'interface entre les deux modules, les réservations verticales (210 ; 310 ; 215 ; 315) étant de préférence agencées pour accueillir des tirants d'assemblage des modules entre eux et/ou des vis s'engageant dans des inserts filetés.

8. Fondation modulaire selon l'une quelconque des revendications précédentes, au moins une partie des modules présentant une cavité verticale (220) sur au moins deux côtés opposés de forme demi-cylindrique, agencée pour former avec une cavité verticale opposée d'un module adjacent un passage interne vertical de plus grande section notamment de section circulaire.

9. Fondation modulaire selon l'une quelconque des revendications précédentes, les modules présentant des premiers reliefs (260 ; 360) sur leur face inférieure, les modules de la ou des couches inférieures présentant des deuxièmes reliefs (370) sur leur face supérieure, les deuxièmes reliefs étant agencés pour s'emboîter au moins partiellement dans les premiers reliefs.

10. Fondation modulaire selon l'une quelconque des revendications précédentes, les modules (20) de la couche supérieure (2) comportant au moins un passage interne débouchant sur au moins leurs faces supérieure (20a) et inférieure (20b), notamment un passage interne formé par la réunion d'une réservation horizontale (250) et d'au moins une réservation verticale (200), de préférence une réservation verticale placée au centre du module, de préférence au moins trois réservations verticales (200) dont une placée au centre du module.

11. Fondation modulaire selon l'une quelconque des revendications précédentes, les modules (30) de la ou des couche(s) inférieure(s) (3) comportant au moins un passage interne débouchant sur au moins l'un de leurs côtés (30c ; 30d) et sur au moins leur face supérieure (30a), de préférence sur au moins deux côtés opposés et sur les faces supérieure et inférieure du module, notamment un passage interne formé par la réunion d'une réservation horizontale (350) et d'au moins une réservation verticale (300).

12. Fondation modulaire selon l'une quelconque des revendications précédentes, les modules (30) de la ou des couche(s) inférieure(s) (3) présentant au moins une cavité horizontale (320) sur au moins deux côtés opposés (30c) de forme demi-cylindrique, agencée pour former avec une cavité horizontale opposée d'un module adjacent un passage interne horizontal de plus grande section, notamment de section circulaire.

13. Fondation modulaire selon l'une quelconque des revendications précédentes, comportant de plus une couche de support (5) comportant des dalles en béton (50) sur lesquelles repose l'ensemble des modules, au moins l'une desdites dalles étant de préférence plus large que le reste des modules, les dalles en béton présentant de préférence sur leur face supérieure des logements (570), dans lesquels les modules de la couche reposant sur la couche de support peuvent venir s'emboiter.

14. Fondation modulaire selon l'une quelconque des revendications précédentes, comportant des réservations (11) traversant verticalement la couche supérieure (2) et au moins partiellement la ou les couches inférieures (3), de préférence au moins quatre réservations, les réservations (11) communiquant de préférence avec des réservations verticales (510) des dalles en béton au niveau de l'interface entre la couche de support (5) et la couche (3) reposant sur la couche de support.

15. Procédé d'installation d'une fondation modulaire en béton telle que définie à l'une quelconque des revendication 1 à 14, procédé comportant les étapes consistant à :
- réaliser une excavation,
- réaliser la fondation en rapportant des modules (20 ; 30) préfabriqués en béton dans l'excavation.

## Patentansprüche

1. Modulares Fundament (1) bestehend aus:
• einer Vielzahl von vorgefertigten Betonmodulen, die vorzugsweise eine Einheit mit einer allgemeinen, im Wesentlichen parallelepipedischen Form bilden, wobei die Module vorzugsweise eine Dicke zwischen 200 und 300 mm aufweisen, wobei diese Vielzahl von Modulen Folgendes definiert:
- eine obere Schicht (2) aus Modulen (20; 25), die mindestens einen inneren Durchgang aufweist, der mindestens auf ihrer Ober- und Unterseite mündet,
- mindestens eine untere Schicht (3) aus Modulen (30; 35), auf der die obere Schicht (2) zumindest teilweise aufliegt und die mindestens einen inneren Durchgang aufweist, der auf mindestens einer ihrer Seiten und auf mindestens ihrer Oberseite mündet,
wobei der innere Durchgang der Schicht (3) an der Grenzfläche zwischen der oberen (2) und der unteren (3) Schicht mit dem inneren Durchgang der oberen Schicht (2) in Verbindung steht, um mindestens einen globalen inneren Durchgang (10) in dem Fundament zu bilden, der auf mindestens einer Seite und auf mindestens der oberen Fläche (1a) des Fundaments mündet,
wobei die Module einer Schicht vorzugsweise seitlich miteinander verbunden sind,
**dadurch gekennzeichnet, dass**
mindestens ein Teil der Module auf mindestens zwei gegenüberliegenden Seiten einen vertikalen Hohlraum (220) aufweist, der so angeordnet ist, dass er mit einem gegenüberliegenden vertikalen Hohlraum eines benachbarten Moduls einen vertikalen inneren Durchgang mit größerem Querschnitt bildet, und/oder
die Module (30) der unteren Schicht(en) (3) mindestens einen horizontalen Hohlraum (320) auf mindestens zwei gegenüberliegenden Seiten (30c) aufweisen, der so angeordnet ist, dass er mit einem gegenüberliegenden horizontalen Hohlraum eines benachbarten Moduls einen horizontalen inneren Durchgang mit größerem Querschnitt bildet.

2. Modulares Fundament nach Anspruch 1, das eine Überlagerung von mindestens drei Schichten (2; 3) von Modulen aufweist.

3. Modulares Fundament nach einem der vorhergehenden Ansprüche, wobei die Module innerhalb einer Schicht mindestens zur Hälfte identisch sind.

4. Modulares Fundament nach einem der vorhergehenden Ansprüche, wobei die Module mit einem Versatz von einer Schicht zur nächsten angeordnet sind, insbesondere von einer Schicht zur nächsten versetzt angeordnet sind.

5. Modulares Fundament nach einem der vorhergehenden Ansprüche, wobei mindestens eine Schicht von Modulen des Fundaments mindestens zwei Module unterschiedlicher Länge (30, 35) aufweist, vorzugsweise mindestens zwei Module, von denen eines (30) eine im Wesentlichen doppelte Länge wie das andere (35) aufweist.

6. Modulares Fundament nach einem der vorhergehenden Ansprüche, wobei der globale innere Durchgang (10) im Fundament auf mindestens zwei Seiten und auf mindestens der Oberseite (1a) des Fundaments, besser auf allen Seiten und auf der Oberseite, mündet, wobei der globale innere Durchgang (10) vorzugsweise einen Querschnitt mit einem Durchmesser (d) von mindestens 80 mm aufweist, wobei der globale innere Durchgang (10) vorzugsweise mindestens eine Hülse aufweist, die die Durchführung von Kabeln, insbesondere von elektrischen Kabeln oder Glasfasern, ermöglicht.

7. Modulares Fundament nach einem der vorhergehenden Ansprüche mit vertikalen Aussparungen (210; 310; 215; 315) auf mindestens zwei zumindest teilweise übereinander liegenden Modulen, wobei die vertikalen Aussparungen an der Schnittstelle zwischen den beiden Modulen miteinander in Verbindung stehen und die vertikalen Aussparungen (210; 310; 215; 315) vorzugsweise so angeordnet sind, dass sie Zugstangen zum Zusammenbau der Module untereinander und/oder Schrauben, die in Gewindeeinsätze eingreifen, aufnehmen können.

8. Modulares Fundament nach einem der vorhergehenden Ansprüche, wobei mindestens ein Teil der Module auf mindestens zwei gegenüberliegenden Seiten einen vertikalen Hohlraum (220) von halbzylindrischer Form aufweist, der so angeordnet ist, dass er mit einem gegenüberliegenden vertikalen Hohlraum eines benachbarten Moduls einen vertikalen inneren Durchgang mit größerem Querschnitt, insbesondere mit kreisförmigem Querschnitt, bildet.

9. Modulares Fundament nach einem der vorhergehenden Ansprüche, wobei die Module auf ihrer Unterseite erste Erhebungen (260; 360) aufweisen, die Module der unteren Schichten auf ihrer Oberseite zweite Erhebungen (370) aufweisen und die zweiten Erhebungen so angeordnet sind, dass sie zumindest teilweise in die ersten Erhebungen passen.

10. Modulares Fundament nach einem der vorhergehenden Ansprüche, wobei die Module (20) der oberen Schicht (2) mindestens einen inneren Durchgang aufweisen, der zumindest auf ihrer oberen (20a) und unteren (20b) Seite mündet, insbesondere einen inneren Durchgang, der durch die Vereinigung einer horizontalen Aussparung (250) und mindestens einer vertikalen Aussparung (200) gebildet wird, vorzugsweise einer vertikalen Aussparung, die in der Mitte des Moduls angeordnet ist, vorzugsweise mindestens drei vertikale Aussparungen (200), von denen eine in der Mitte des Moduls angeordnet ist.

11. Modulares Fundament nach einem der vorhergehenden Ansprüche, wobei die Module (30) der unteren Schicht(en) (3) mindestens einen inneren Durchgang aufweisen, der auf mindestens einer ihrer Seiten (30c; 30d) und auf mindestens ihrer Oberseite (30a), vorzugsweise auf mindestens zwei gegenüberliegenden Seiten und auf der Ober- und Unterseite des Moduls, mündet, insbesondere einen inneren Durchgang, der durch die Vereinigung einer horizontalen Aussparung (350) und mindestens einer vertikalen Aussparung (300) gebildet wird.

12. Modulares Fundament nach einem der vorhergehenden Ansprüche, wobei die Module (30) der unteren Schicht(en) (3) mindestens einen horizontalen Hohlraum (320) auf mindestens zwei gegenüberliegenden Seiten (30c) von halbzylindrischer Form aufweisen, der so angeordnet ist, dass er mit einem gegenüberliegenden horizontalen Hohlraum eines benachbarten Moduls einen horizontalen inneren Durchgang mit größerem Querschnitt, insbesondere mit kreisförmigem Querschnitt, bildet.

13. Modulares Fundament nach einem der vorhergehenden Ansprüche, das darüber hinaus eine Stützschicht (5) mit Betonplatten (50) aufweist, auf denen alle Module ruhen, wobei mindestens eine der Platten vorzugsweise breiter ist als der Rest der Module, wobei die Betonplatten vorzugsweise auf ihrer Oberseite Aufnahmen (570) aufweisen, in die die Module der auf der Stützschicht ruhenden Schicht einrasten können.

14. Modulares Fundament nach einem der vorhergehenden Ansprüche mit Aussparungen (11), die vertikal durch die obere Schicht (2) und zumindest teilweise durch die untere(n) Schicht(en) (3) verlaufen, vorzugsweise mindestens vier Aussparungen, wobei die Aussparungen (11) vorzugsweise mit vertikalen Aussparungen (510) der Betonplatten an der Grenzfläche zwischen der Stützschicht (5) und der auf der Stützschicht liegenden Schicht (3) in Verbindung stehen.

15. Verfahren zum Installieren eines modularen Betonfundaments, wie es in einem der Ansprüche 1 bis 14 definiert ist, wobei das Verfahren die folgenden Schritte aufweist:
- Herstellen eines Aushubs,
- Herstellen des Fundaments, indem vorgefertigte Betonmodule (20; 30) in den Aushub gebracht werden.

## Claims

1. Modular foundation (1) including:
• a plurality of prefabricated concrete modules, preferably forming a whole of substantially parallelepipedal general shape, the modules preferably having a thickness between 200 and 300 mm inclusive, this plurality of modules defining:
- an upper layer (2) of modules (20; 25) including at least one internal passage opening onto at least its upper and lower faces,
- at least one lower layer (3) of modules (30; 35) on which the upper layer (2) at least partially rests, including at least one internal passage opening onto at least one of its sides and onto at least its upper face, the internal passage of said layer (3) communicating at the level of the interface between the upper (2) and lower (3) layers with the internal passage of the upper layer (2) in such a manner as to form at least one global internal passage (10) in the foundation opening onto at least one side and onto at least the upper face (1a) of the foundation,
the modules of the same layer preferably being assembled to one another laterally,
**characterized in that**
at least some of the modules include a vertical cavity (220) on at least two opposite sides and adapted to form with an opposite vertical cavity of an adjacent module a vertical internal passage of greater section, and/or
the modules (30) of the lower layer or layers (3) include at least one horizontal cavity (320) on at least two opposite sides (30c) and adapted to form with an opposite horizontal cavity of an adjacent module a horizontal internal passage of greater section.

2. Modular foundation according to Claim **1,** including a stack of at least three layers (2; 3) of modules.

3. Modular foundation according to one of the preceding claims, the modules in a layer being identical at least half by half.

4. Modular foundation according to one of the preceding claims, the modules being disposed with an offset from one layer to the next, in particular by being disposed in a quincunx arrangement from one layer to the next.

5. Modular foundation according to one of the preceding claims, at least one layer of modules of the foundation including at least two modules (30, 35) with different lengths, preferably at least two modules one of which (30) has a length substantially twice that of the other one (35).

6. Modular foundation according to one of the preceding claims, the global internal passage (10) in the foundation opening onto at least two sides and onto at least the upper face (1a) of the foundation, better still onto all the sides and onto the upper face, the global internal passage (10) preferably having a section that has a diameter (d) at least equal to 80 mm, the global internal passage (10) preferably including at least one duct enabling the passage of cables, in particular electrical cables or optical fibres.

7. Modular foundation according to one of the preceding claims, including vertical reservations (210; 310; 215; 315) on at least two at least partially stacked modules, the vertical reservations communicating at the level of the interface between the two modules, the vertical reservations (210; 310; 215; 315) preferably being arranged to receive tie-rods for assembling modules to one another and/or bolts engaging in threaded inserts.

8. Modular foundation according to one of the preceding claims, at least some of the modules including a vertical cavity (220) of semi-cylindrical shape on at least two opposite sides and adapted to form with an opposite vertical cavity of an adjacent module a vertical internal passage of greater section, in particular of circular section.

9. Modular foundation according to one of the preceding claims, the modules having first reliefs (260; 360) on their lower face, the modules of the lower layer or layers having second reliefs (370) on their upper face, the second reliefs being arranged to be nested at least partially in the first reliefs.

10. Modular foundation according to one of the preceding claims, the modules (20) of the upper layer (2) including at least one internal passage opening onto at least their upper (20a) and lower (20b) faces, in particular an internal passage formed by the combination of a horizontal reservation (250) and at least one vertical reservation (200), preferably a vertical reservation placed at the centre of the module, preferably at least three vertical reservations (200) including one placed at the centre of the module.

11. Modular foundation according to one of the preceding claims, the modules (30) of the lower layer or layers (3) including at least one internal passage opening onto at least one of their sides (30c; 30d) and onto at least their upper face (30a), preferably onto at least two opposite sides and onto the upper and lower faces of the module, in particular an internal passage formed by the combination of a horizontal reservation (350) and at least one vertical reservation (300).

12. Modular foundation according to one of the preceding claims, the modules (30) of the lower layer or layers (3) including at least one horizontal cavity (320) of semi-cylindrical shape on at least two opposite sides (30c) and adapted to form with an opposite horizontal cavity of an adjacent module a horizontal internal passage of greater section, in particular of circular section.

13. Modular foundation according to one of the preceding claims, further including a support layer (5) including concrete slabs (50) on which all the modules rest, at least one of said slabs preferably being wider than the rest of the modules, the concrete slabs preferably including on their upper face housings (570) in which the modules of the layer resting on the support layer can come to nest.

14. Modular foundation according to one of the preceding claims, including reservations (11) passing vertically through the upper layer (2) and at least partially through the lower layer or layers (3), preferably at least four reservations, the reservations (11) preferably communicating with vertical reservations (510) of the concrete slabs at the level of the interface between the support layer (5) and the layer (3) resting on the support layer.

15. Method for installing a modular concrete foundation as defined in any one of Claims 1 to 14, the method including the steps of:
- producing an excavation,
- producing the foundation by placing prefabricated concrete modules (20; 30) in the excavation.
